# EUROPEAN PATENT SPECIFICATION

(11) **EP 2 727 179 B1**
(45) Date of publication and mention of the grant of the patent: **01.08.2018**
(21) Application number: 12762317.1
(22) Date of filing: 28.06.2012
(51) Int. Cl.: H01M 8/04858, H01M 8/04955, H01M 8/04223, H01M 8/0432, H01M 8/04537, H01M 8/249, H01M 8/124, H01M 16/00

(54) **METHOD AND ARRANGEMENT FOR MINIMIZING NEED FOR SAFETY GASES**
VERFAHREN UND ANORDNUNG ZUR MINIMIERUNG DES BEDARFS AN SICHERHEITSGASEN
PROCÉDÉ ET DISPOSITIF PERMETTANT DE RÉDUIRE AU MINIMUM LES BESOINS EN GAZ DE SÉCURITÉ

(30) Priority: 30.06.2011 FI 20115685
(43) Date of publication of application: 07.05.2014
(73) Proprietor: Convion Oy, 02150 Espoo (FI)
(72) Inventor: HOTTINEN, Tero, FI-08680 Lohja (FI); ÅSTRÖM, Kim, FI-02460 Kirkkonummi (FI); LAITINEN, Marko, FI-01690 Vantaa (FI)
(74) Representative: Finnpatent Oy
(86) International application number: PCT/FI2012/050676
(87) International publication number: WO 2013/001166

(56) References cited:
- US-A- 3 544 374
- US-A1- 2002 028 362
- US-A1- 2002 168 555
- US-A1- 2005 095 469

## Description

### The field of the invention

Most of the energy of the world is produced by means of oil, coal, natural gas or nuclear power. All these production methods have their specific problems as far as, for example, availability and friendliness to environment are concerned. As far as the environment is concerned, especially oil and coal cause pollution when they are combusted. The problem with nuclear power is, at least, storage of used fuel.

Especially because of the environmental problems, new energy sources, more environmentally friendly and, for example, having a better efficiency than the above-mentioned energy sources, have been developed. Fuel cell device are promising future energy conversion device by means of which fuel, for example bio gas, is directly transformed to electricity via a chemical reaction in an environmentally friendly process.

### The state of the art

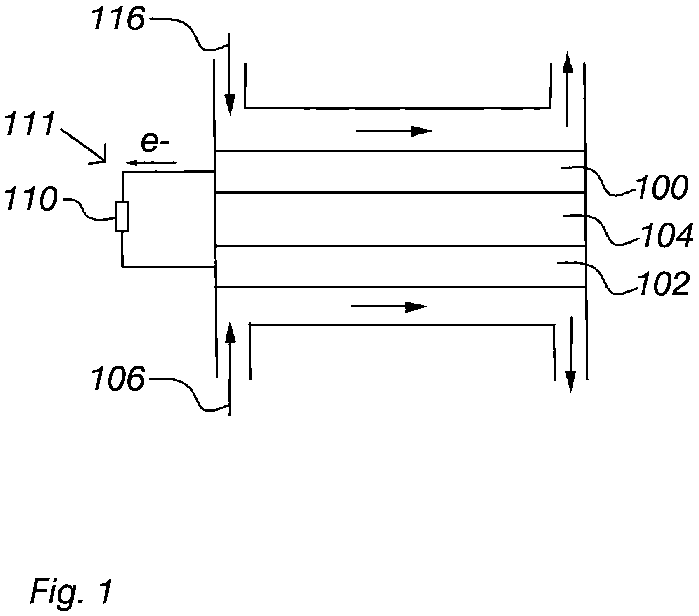

Fuel cell, as presented in fig 1, comprises an anode electrode side 100 and a cathode electrode side 102 and an electrolyte material 104 between them. As the arrows in figure 1 symbolize, fuel 116 is fed to the anode side and air 106 is fed to the cathode side, and thus the cathode electrode is also called "air electrode". In solid oxide fuel cells (SOFCs) oxygen (e.g. air 106) is fed to the cathode side 102 and it is reduced to a negative oxygen ion by receiving electrons from the anode via an external electrical circuit 111. The negative oxygen ion goes through the electrolyte material 104 to the anode side 100 where it reacts with the fuel 116 producing water and also typically carbondioxide (CO2). Between anode 100 and cathode 102 is the external electric circuit 111 comprising a load 110 for the fuel cell.

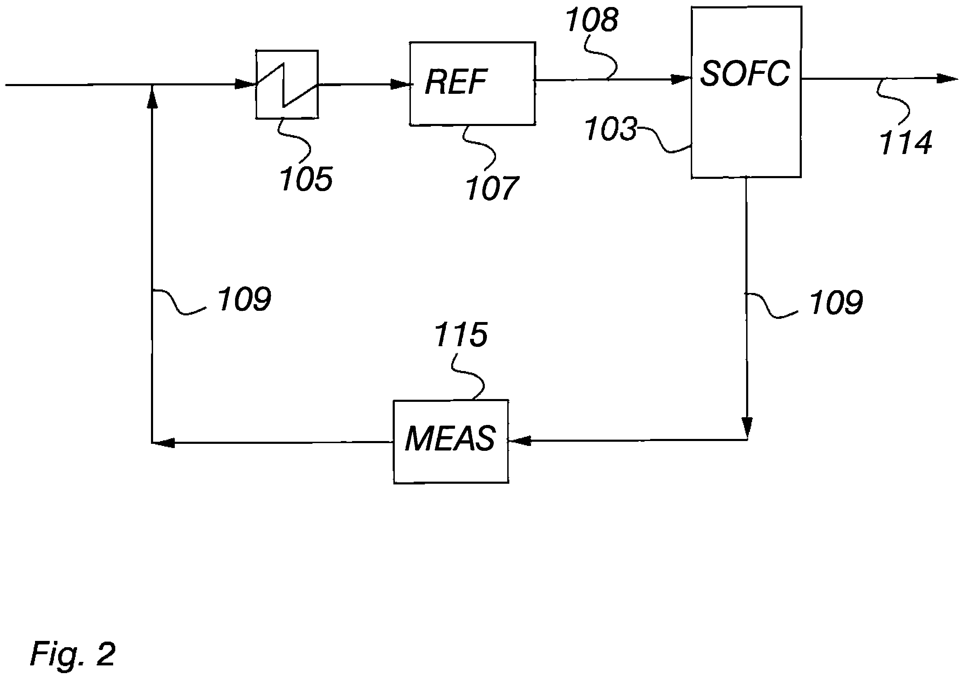

In figure 2 is presented a SOFC device as an example of a high temperature fuel cell device. SOFC device can utilize as fuel for example natural gas, bio gas, methanol or other compounds containing hydrocarbon mixtures. SOFC device in figure 2 comprises more than one, typically plural of fuel cells in stack formation 103 (SOFC stack). Each fuel cell comprises the anode 100 and the cathode 102 structure as presented in figure 1. Part of the used fuel is recirculated in feedback arrangement 109 through each anode. By using measurement means 115 (such as fuel flow meter, current meter and temperature meter) is carried out necessary measurements from the gas which can be recirculated through the anode sides 100. Only part of the gas used at the anode sides 100 is recirculated through anodes in feedback arrangement 109 and the other part of the gas is exhausted 114 from the anodes 100.

SOFC device in fig 2 also comprises fuel heat exchanger 105 and reformer 107. Heat exchangers are used for controlling thermal conditions in fuel cell process and there can be located more than one of them in different locations of SOFC device. The extra thermal energy in circulating gas is recovered in one or more heat exchanger 105 to be utilized in SOFC device or outside heat recovering unit. Reformer 107 is a device that converts the fuel such as for example natural gas to a composition suitable for fuel cells, for example to a composition containing hydrogen and methane, carbondioxide, carbonmonoxide and inert gases. Anyway in each SOFC device it is though not necessary to have a reformer.

A solid oxide fuel cell (SOFC) device is an electrochemical conversion device that produces electricity directly from oxidizing a fuel. Advantages of SOFC device include high efficiencies, long term stability, low emissions, and cost. The main disadvantage is the high operating temperature which results in long start up times and both mechanical and chemical compatibility issues. Solid oxide fuel cells (SOFC) operate at temperatures of 600-1000 °C.

The anode electrode of solid oxide fuel cell (SOFC) typically contains significant amounts of nickel that is vulnerable to form nickel oxide if the atmosphere is not reducing. If nickel oxide formation is severe, the morphology of electrode is changed irreversibly causing significant loss of electrochemical activity or even break down of cells. Hence, SOFC systems require safety gas containing reductive agents (such as hydrogen diluted with inert such as nitrogen) during the start-up and shut-down in order to prevent the fuel cell's anode electrodes from oxidation. In practical systems the amount of safety gas has to be minimized because extensive amount of, e.g. pressurized gas containing hydrogen, are expensive and problematic as space-requiring components.

Oxidation of anodes can be prevented by maintaining a reducing atmosphere in the anode flow channels. Reducing conditions can be maintained by feeding fuel or other reducing species such as hydrogen containing gas at a rate sufficient to reduce all oxygen arriving to the anodes. If the reducing gas has a high hydrogen (or hydrogen equivalent) content required flows are relatively small and if ordinary fuel can be used no additional gas source is required. By suitable process and safety arrangements ordinary fuel can be used for maintaining reducing atmosphere at the anodes during normal operations as well as during start-up and controlled shutdown. However, in the case of an emergency shutdown (ESD) due to e.g. a gas alarm, all feed of combustible gases must be immediately discontinued. If hydrogen is still needed at the anodes it must be supplied in the form of a dilute mixture with sufficiently low hydrogen content not to form an explosive mixture with air in any mixing proportions. For a hydrogen-nitrogen mixture, the hydrogen content shall be no higher than 5% to meet this criterion. This increases the required volume flow to 20-fold compared to feed of pure hydrogen.

According to prior art applications the amount of runtime reactants during normal start-up or shut-down is minimized by anode recirculation, i.e. circulating the non-used safety gas back to the loop, as there is simultaneous need for minimization of the runtime reactants and heating time in the start-up situation and also simultaneous need for minimization of the runtime reactants and cooling of the system in the shut-down situation. It is possible to minimize also start-up heating time in said recirculation process, because also heat can be recirculated in the process together with the non-used gas. However, in emergency shut-down (ESD) that may be caused e.g. by gas alarm or black-out, there won't be active recirculation available increasing the amount of needed safety gas. In addition, the cathode air flow is neither cooling the system during the ESD, because the air blower has to be shut down, and hence the amount of needed safety gas is even more increased as the time to cool the system down to temperatures where nickel oxidation does not happen is even three-fold compared to active shut-down situation.

In the ESD situation the total amount of gas required is determined by the time required for the system to cool down to below the anode oxidation temperatures. Since no active cooling mechanism may be available during the emergency cool-down, the cooling time may be up to tens of hours for a well-insulated system. This implies the need for large safety gas storage in conjunction with the fuel cell unit. In addition to added cost the gas storage also significantly increases the space requirement for the fuel cell system installation. Moreover, the gas storage and delivery logistics (bottle or bottle rack replacements) pose additional requirements on the fuel cell system environment and cost for each replacement. All together the need for a massive amount of purge gas (i.e. safety gas) is a significant obstacle for the feasibility of fuel cell systems in many applications.

In patent application document US2002/028362 is presented anode oxidation protection methods in a high temperature fuel cell system during shut downs or fuel loss events. In one method of US2002/028362 is maintained a reducing atmosphere around an anode of a molten carbonate or solid oxide fuel cell by: (a) monitoring the electrical potential generated by the fuel cell; and (b) applying an external electrical potential across the fuel cell, such that electric current flows through the fuel cell in a direction opposite to current flow during normal operation of the fuel cell, whenever the voltage output of the fuel cell drops below a predetermined level. An external power source is applied after said droppings below the predetermined voltage level, which in practice is a substantially low voltage level. At least in lower operating temperatures these kind of embodiments are not successful to prevent anode oxidation. In emergency shutdown situations (ESD) the described type of methods can be not applied as such.

In patent application document US2005/095469 A1 is presented embodiments of applying a voltage across high temperature fuel cells giving rise to a current with direction opposite to that in normal operation thus preventing oxidation of anodes. US2005/095469 A1 does anyway not present a source of electrical energy for supplying such protective current.

### Short description of the invention

The object of the invention is to accomplish a fuel cell system where the risk of anode oxidation in shut-down situations can be reduced to minimize the need of safety gases. This is achieved by an arrangement for minimizing need for safety gases in high temperature fuel cell system, each fuel cell in the fuel cell system comprises an anode side, a cathode side, and an electrolyte between the anode side and the cathode side, the fuel cells being arranged in fuel cell stacks, and the fuel cell system comprises a fuel cell system piping for reactants, and means for feeding fuel to the anode sides of the fuel cells. The arrangement comprises means for electrical anode protection supplying a predefined voltage separately to at least two fuel cell stacks or groups of fuel cell stacks to prohibit oxidation of anodes, a source of energy sufficient for providing electrical energy for at least a predetermined minimum time for said means for electrical anode protection, means to reduce said predefined voltage to limit anode protection current to a predefined maximum current value separately for at least two stacks or groups of stacks, and means to reliably trigger said means for electrical anode protection in a situation where anode oxidation cannot be prohibited by the means for feeding fuel to the anode sides of the fuel cells.

The focus of the invention is also a method for minimizing need for safety gases in a high temperature fuel cell system, in which method fuel is fed to anode sides of the fuel cells, and is obtained predefined voltage and current values. In the method is performed electrical anode protection by supplying a predefined voltage separately to at least two fuel cell stacks or groups of the fuel cell stacks to prohibit oxidation of anodes, is provided electrical energy for at least a predetermined minimum time for the performing of said electrical anode protection, is reduced said predefined voltage to limit anode protection current to a predefined maximum current value separately for at least two stacks or groups of stacks, and in the method is reliably triggered the performing of electrical anode protection in a situation where anode oxidation cannot be prohibited by feeding fuel to the anode sides of the fuel cells.

The invention is based on the utilization of a source of energy sufficient for providing electrical energy for at least a predetermined minimum time for electrical anode protection supplying a predefined voltage separately to at least two fuel cell stacks or groups of fuel cell stacks to prohibit oxidation of anode sides. Said predefined voltage is used to limit anode protection current to a predefined maximum current value separately to at least two stacks or groups of stacks. Furthermore, electrical anode protection is reliably triggered in a situation where anode oxidation cannot be prohibited by feeding fuel to the anode sides of the fuel cells.

The benefit of the invention is that significant savings in economical costs and in the physical size of the fuel cell system can be achieved in reducing the risk of anode oxidation in an emergency shutdown situation.

### Short description of figures

- Figure 1: presents a single fuel cell structure.
- Figure 2: presents an example of a SOFC device.
- Figure 3: presents a first preferred embodiment according to the present invention.
- Figure 4: presents a preferred example embodiment of means for electrical anode protection of the fuel cell stacks.
- Figure 5: presents a second preferred embodiment according to the present invention.

### Detailed description of the invention

Solid oxide fuel cells (SOFCs) can have multiple geometries. The planar geometry (Fig 1) is the typical sandwich type geometry employed by most types of fuel cells, where the electrolyte 104 is sandwiched in between the electrodes, anode 100 and cathode 102. SOFCs can also be made in tubular geometries where for example either air or fuel is passed through the inside of the tube and the other gas is passed along the outside of the tube. The tubular design is better in sealing air from the fuel. Anyway the performance of the planar design is better than the performance of the tubular design however, because the planar design has a lower resistance comparatively. Other geometries of SOFCs include modified planar cells (MPC or MPSOFC), where a wave-like structure replaces the traditional flat configuration of the planar cell. Such designs are promising, because they share the advantages of both planar cells (low resistance) and tubular cells.

The ceramics used in SOFCs do not become ionically active until they reach very high temperature and as a consequence of this the stacks have to be heated at temperatures ranging from 600 to 1,000 °C. Reduction of oxygen 106 (Fig. 1) into oxygen ions occurs at the cathode 102. These ions can then be transferred through the solid oxide electrolyte 104 to the anode 100 where they can electrochemically oxidize the gas used as fuel. In this reaction, water and carbondioxide byproducts are given off as well as two electrons. These electrons then flow through an external circuit 111 where they can be utilized to produce electrical current. The cycle then repeats as those electrons enter the cathode material 102 again.

In large solid oxide fuel cell systems typical fuels are natural gas (mainly methane), different biogases (mainly nitrogen and/or carbondioxide diluted methane), and other higher hydrocarbon containing fuels, including alcohols. Fuel is fed to the anode sides by means 108 (in figures 2, 3, 5) for feeding fuel, said means comprising necessary connection piping from a fuel source containing fuel to the anode sides 100 of the fuel cells 103. Methane and higher hydrocarbons need to be reformed either in the reformer 107 (Fig 2) before entering the fuel cell stacks 103 or (partially) internally within the stacks 103. The reforming reactions require certain amount of water, and additional water is also needed to prevent possible carbon formation (coking) caused by methane and especially higher hydrocarbons. This water can be provided internally by circulating the anode gas exhaust flow, because water is produced in excess amounts in fuel cell reactions, and/or said water can be provided with a separate water feed (e.g. direct fresh water feed or circulation of exhaust condensate). By anode recirculation arrangement also part of the unused fuel and dilutants in anode gas are fed back to the process, whereas in the separate water feed arrangement only additive to the process is water.

Embodiments according to the present invention for preventing oxidation at the anodes are arranged by maintaining a suitable electrical field across the cells, which prevents the nickel oxidation reaction from taking place. In order to maintain the field, a current needs to be supplied to the fuel cells. The magnitude of the current correlates to the amount of oxygen arriving to the anodes. In the following, various techniques and methods to utilize electric anode protection also during emergency shutdown conditions are presented.

Emergency shutdowns can be caused by a number of reasons internal or external to the fuel cell system, these reasons including gas leakages, grid outages and critical component failures. For example, since gas leakage is one of the potential causes causing emergency shutdowns, the fuel cell system must be of explosion-safe type.

For electrical equipment this implies a requirement for EX-classification, zone 2 (occurrence of explosive atmosphere is rare) or better. If electric anode protection is to be used in emergency shutdown conditions it must be shown that it does not increase the risk of an explosion for each of the affected parts including: fuel cell stacks, current collection and cabling, electrical circuitry and source of energy.

With respect to the fuel cell stacks 103, the use of electrical anode protection has essentially no effect on explosion safety. Irrespective of whether the anodes are protected by purge gas feed or electronically, the stacks will have a voltage close to OCV (open circuit voltage) as long as they are hot. Levels of OCV are typically between 1V - 1.15 V depending on the stacks and operating temperatures. Stack surface temperatures will be essentially the same and initially typically well above self-ignition temperatures of likely leaking gases. When the electric anode protection is equipped with current limiting features it can in fact reduce the risk of overheating caused by local leakages or stack short circuits. Hence, with respect to the fuel cell stacks explosion safety is not an obstacle for using electric anode protection during emergency shutdown condition.

For current collection essentially the same applies as for fuel cell stacks 103. Since circuit breakers cannot be placed in the hot environment, the hot part of stack current collectors and cables will always carry the stack voltages and hence make no difference whether purging or electrical protection is used. The current used for electrical protection is at least an order of magnitude smaller than nominal fuel cell currents whereby the corresponding thermal load on the cabling is negligible. For the cold parts of the current collection, normal EX-practises can be applied. It is also emphasized that said protection current used for electrical anode protection is not same as current which is fed from the fuel cells 103 to an electrical network.

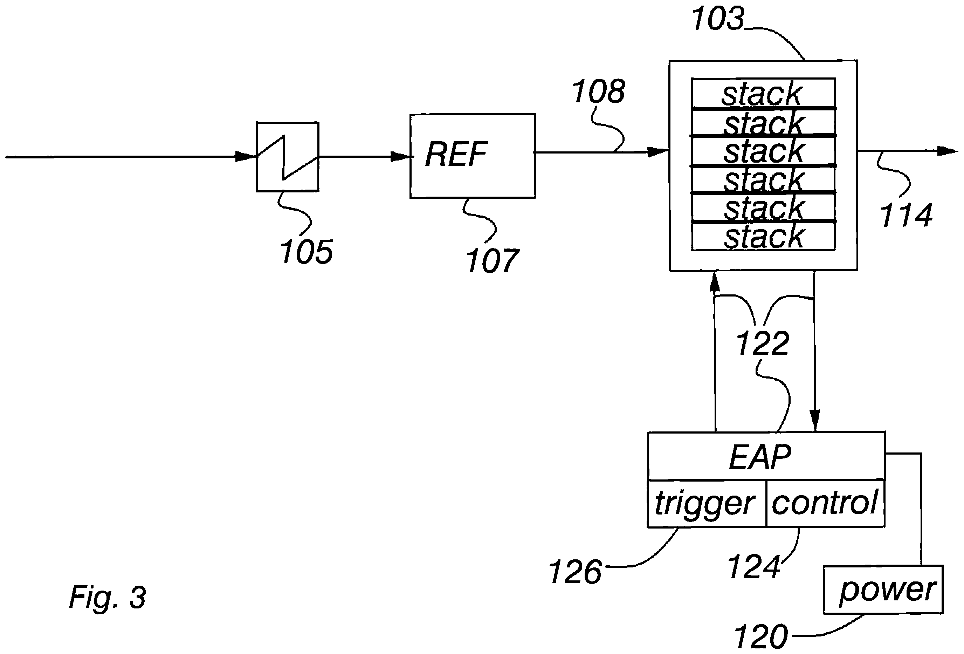

In figure 3 is presented a first preferred arrangement according to the present invention in a high temperature fuel cell system. The electronic circuitry 122 used to accomplish electrical protection, i.e. means 122 for electrical anode protection preferably comprise means for converting the electrical energy from a source 120 to a controlled voltage and peak-limited current to be fed to the stacks 103. Thus means 122 preferably comprise a power electronics circuitry. For EX-zones 1 and 2 e.g. a flameproof enclosure can be utilized to comply with EX requirements.

Various sources 120 of energy can be used for providing the electrical power for the electrical anode protection. Options include batteries (e.g. lead-acid, lithium), supply from an external UPS or safety supply AC or DC source (e.g. emergency power source in marine applications) and backup generators. Combinations of several sources can be used, e.g. feed from the grid safeguarded with batteries to cover for a grid outage of limited length. Batteries or an emergency generator can be placed in a separate non-hazardous area in order to avoid the need for EX-classifications. At least for batteries, EX-approved enclosures are also available. The source 120 of energy is sufficient for providing electrical energy for at least a predetermined minimum time for said means 122 of electrical anode protection. The predetermined minimum time is based for example on fuel cell system calculations and/or fuel cell system measurements during or before the fuel system operation process.

The present invention also comprises means 126 to reliably trigger said means 122 for electrical anode protection in a situation where anode oxidation cannot be prohibited by the means 108 for feeding fuel to the anode sides 100 of the fuel cells 103. Means 126 trigger, i.e. switch the electrical anode protection on. Thus means 126 are for example a trigger switch or trigger electronics to perform the trigger operation according to the invention. A command to perform the trigger operation shall preferably be given to the means 126 from power electronics control means 124 or from a fuel cell system control processor.

The amount of current needed for maintaining the required electrical field at the anode depends on the level of leakage of the stacks and on the level of earth currents, etc. , and for these purposes the presented invention presents solutions to limit current values. An absolute need for hydrogen can be determined in the electric anode protection by determining the amount of oxygen leakage, and on the basis of said oxygen amount is determined the corresponding hydrogen amount. In a process according to the invention where is utilized combined electric anode protection and purging, the needed hydrogen amount is provided by said determination especially in situations when only purging is in use in the process. A pessimistic estimate for the current required for electrical anode protection in order to achieve the same level of protection as with only using purge gas can be obtained by assuming that all hydrogen in the purge gas is consumed. Said estimate is pessimistic because requirements of purge gas amounts have considerable safety margins when only prior art purging process is used. The safety margins have been set because of different kinds of uncertainty factors. The real need for hydrogen would be less, and thus the real level of current for electrical anode protection would also be less.

The voltage applied in electrical anode protection should be set such that neither nickel oxidation nor carbon formation will take place. Numerical values presented in the following approach are based on experimental thermodynamic calculations, which (or similar kind of values) can be also found from the literature. If a constant voltage is used, then this voltage should be close to 1.0V. If temperature information of the stacks is available, then the power consumption can be reduced by reducing the voltage down to 0.8V at high temperatures where currents are also expected to be highest. In one preferred embodiment of the invention the power electronics control means 124 comprise a stack resistance (ASR) measurement means for modulating the anode protection current for example by injecting a highfrequency AC (alternating current) signal on top of the DC (direct current) signal to obtain stack resistance information. The obtained stack resistance information can be used to approximate the stack temperature and then used to determine the appropriate electrical protection voltage value to be used without the need for an actual temperature measurement. Preferably the means 124 obtain temperature values separately of the fuel cell stacks 103 by injecting a high frequency alternating voltage signal along with and on top of a direct current signal separately to each stack 103 or group of stacks to measure stack specific resistance information. Then an individual temperature information is determined for each stack or group of stacks on the basis of said stack-specific resistance information, and said temperature information is utilized in limitation of current values used in a stack-specific electrical anode protection.

Further, the control means 124 comprise means 124 for reducing the predefined protection voltage to limit the protection current to a predefined maximum value in a stack-specific electrical anode protection in case of faulty stacks or short circuited stacks. In these situations the possible short circuit stack(s) do(es) not empty the whole usable protection current potential, and protection current can still be provided to the other stacks to prevent them from damaging. The other stacks are thus kept still in use by this kind of separate use arrangement arranged according to the present invention. The predefinition of maximum current values is based at least on temperature information of the stacks 103, and said predefinition can be performed during or before the fuel system operation process. The means 124 for reducing the predefined voltage can be comprised of simple voltage reduction techniques according to prior art or of more complicated voltage control techniques.

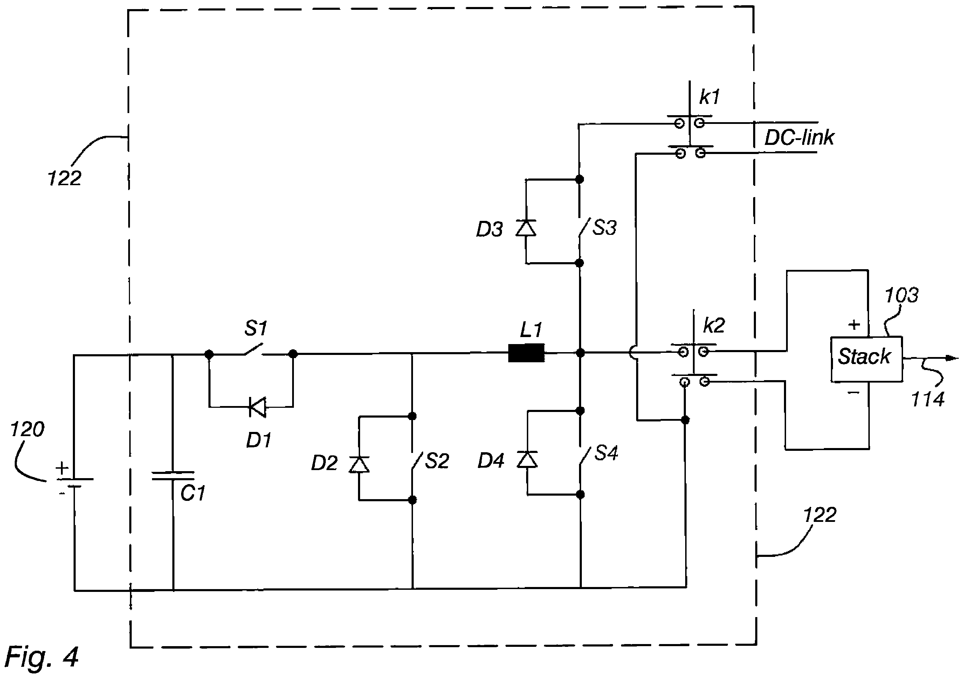

In figure 4 is presented a preferred example embodiment of means 122 for electrical anode protection of the fuel cell stacks. The means 122 comprise of diodes D1, D2, D3, D4, first switches S1, S2, S3, S4, second switches k1, k2, a capacitor C1 and an inductor L1. The diodes and the first switches are in parallel connections. The means 122 are connected to a DC-link via the second switch k1, to the fuel cell stacks 103 via the second switch k2, and to the source 120 of energy in parallel connection to the capacitor C1. The means 122 operate in a stack protection state when S1 and D2 are active, k2 is closed and k1 is open. When a battery is used as the source 120 of energy, the means 122 operate in a battery charge state when S3 and D4 are active, k1 is closed and k2 is open. Further the means 122 operate as a transient energy buffer, when S4 and D3 are active, S1 is closed and k1 is closed.

In one preferred embodiment of the invention means 122 for electrical anode protection, i.e. the power electronics circuitry for electrical anode protection can be connected to the stacks 103 continuously and be controlled by a single enable/disable signal. The presence of means 122 allows for releasing requirements on minimum operation current of a main power converter (e.g. DC/DC) as the protection circuitry, i.e. means 122, can assist the fuel cell stacks 103 in delivering current during start of loading. Depending on the topology used in the main converter, the possibility to start up with a higher current allows for design simplifications and cost savings.

If the electrical anode protection power source 120 is implemented as a large battery pack then it can also be utilized to provide additional functionality to the fuel cell system. If connected to a main inverter it can act as a transient energy buffer in island mode operation and furthermore the fuel cell system can implement UPS (Uninterruptible Power Supply) functionality.

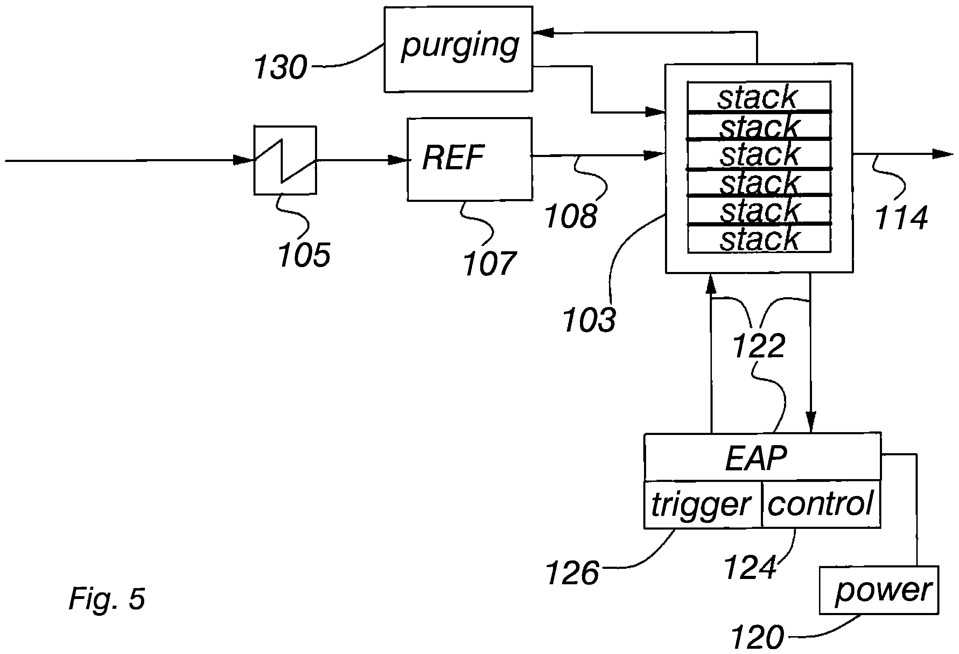

In figure 5 is presented a second preferred arrangement according to the present invention, which arrangement comprises a pneumatic actuation arrangement 130 for purging operation in the emergency shutdown situation to minimize need for safety gases together with the electric anode protection arrangement presented for example related to figure 3. The arrangement 130 for purging operation is for example one of purging arrangements presented in patent application FI20105196. Such pneumatic actuation arrangement for spooling operation is preferably located in the cathode side 102 of high temperature fuel cell system for substantially reducing the need of purge gas (i.e. safety gas) in the anode side in the case of an emergency shut-down (ESD) situation, but the arrangement can also be applied in the anode side 100 or simultaneously both in the anode side 100 and the cathode side 102 of the high temperature fuel cell system. By this kind of combined purging and electrical anode protection arrangement can be achieved substantially smaller oxygen leakages, and thus a considerably smaller source of energy 120 is sufficient for the electrical anode protection. Especially in a large volume fuel cell system the system size can be arranged substantially smaller and economical costs are less than in a system using the electrical anode protection without said purging.

Although the invention has been presented in reference to the attached figures and specification, the invention is by no means limited to those as the invention is subject to variations within the scope allowed for by the claims.

## Claims

1. An arrangement for minimizing need for safety gases in high temperature fuel cell system, each fuel cell in the fuel cell system comprises an anode side (100), a cathode side (102), and an electrolyte (104) between the anode side and the cathode side, the fuel cells being arranged in fuel cell stacks (103), and the fuel cell system comprises a fuel cell system piping for reactants, and means (108) for feeding fuel to the anode sides (100) of the fuel cells, **characterized by**, that the arrangement comprises:
- means (122) for electrical anode protection supplying a predefined voltage separately to at least two groups of fuel cell stacks (103) to prohibit oxidation of anodes (100),
- a back-up source (120) of energy sufficient for providing electrical energy for at least a predetermined minimum time for said means (122) for electrical anode protection,
- means (124) for separately reducing the predefined voltage to limit anode protection current to a predefined maximum current value for electrical anode protection of a stack 103 or group of stacks in case of faulty stacks thereby keeping the other stacks provided with protection current to prevent them from damaging,
- and the arrangement comprises means (126) to reliably trigger said means (122) for electrical anode protection in a situation where anode oxidation cannot be prohibited by the means (108) for feeding fuel to the anode sides (100) of the fuel cells, and the arrangement further comprises means for allowing for explosion safe operation in the presence of an explosive atmosphere, and the arrangement further comprises means to reliably deenergize all non-safe equipment.

2. An arrangement for minimizing need for safety gases in high temperature fuel cell system in accordance with claim 1, **characterized by**, that the situation is an emergency shutdown situation, where anode oxidation cannot be prohibited by the means (108) for feeding fuel to the anode sides (100) of the fuel cells.

3. An arrangement for minimizing need for safety gases in high temperature fuel cell system in accordance with claim 1, **characterized by**, that the arrangement comprises means (124) for obtaining temperature values of the fuel cell stacks (103) and for defining said predefined voltage values as a function of said temperature values.

4. An arrangement for minimizing need for safety gases in high temperature fuel cell system in accordance with claim 3, **characterized by**, that the arrangement comprises said means (124) for obtaining temperature values of the fuel cell stacks (103) on the basis of stack resistance information, which is accomplished by modulating the anode protection current.

5. An arrangement for minimizing need for safety gases in high temperature fuel cell system in accordance with claim 4, **characterized by**, that the arrangement comprises the means (124) for obtaining temperature values separately of the fuel cell stacks (103) by injecting a high frequency alternating voltage signal along with and on top of a direct current signalto each group of stacks to measure stack specific resistance information, and by determining individual temperature information for each group of stacks on the basis of said stack-specific resistance information at least to limit current values used in a stack-specific electrical anode protection.

6. An arrangement for minimizing need for safety gases in high temperature fuel cell system in accordance with claim 2, **characterized by**, that the arrangement comprises means (130) for displacement of reactants by purging in the emergency shutdown situation to minimize need for safety gases together with the arrangement according to the claim 1.

7. An arrangement for minimizing need for safety gases in high temperature fuel cell system in accordance with claim 1, **characterized by**, that the arrangement comprises a substantially powerful battery source as the source (120) of energy for providing electrical energy for the electric anode protection of the fuel cell stacks (103), and for operating as a transient energy buffer in island mode operation and/or for implementing Uninterruptible Power Supply, UPS, functionality by the fuel cell system.

8. An arrangement for minimizing need for safety gases in high temperature fuel cell system in accordance with claim 1, **characterized by**, that the arrangement comprises a back-up generator as the source (120) of energy for providing electrical energy for the electric anode protection of the fuel cell stacks (103), and/or for implementing Uninterruptible Power Supply, UPS, functionality by the fuel cell system.

9. A method for minimizing need for safety gases in a high temperature fuel cell system, in which method fuel is fed to anode sides (100) of the fuel cells, and is obtained predefined voltage and current values, **characterized by**, that in the method:
- is performed electrical anode protection by supplying a predefined voltage separately to at least two groups of fuel cell stacks (103) to prohibit oxidation of anodes (100),
- is provided electrical energy from a back-up source (120) of energy for at least a predetermined minimum time for the performing of said electrical anode protection,
- is separately reduced the predefined voltage to limit anode protection current to a predefined maximum current value for electrical anode protection of a stack 103 or group of stacks in case of faulty stacks thereby keeping the other stacks provided with protection current to prevent them from damaging,
- and is reliably triggered the performing of electrical anode protection in a situation where anode oxidation cannot be prohibited by feeding fuel to the anode sides (100) of the fuel cells, and in the method an explosion safe operation is allowed in the presence of an explosive atmosphere and all non-safe equipment are reliably de-energized.

10. A method in accordance with claim 9, **characterized by**, that the situation is an emergency shutdown situation, where anode oxidation cannot be prohibited by feeding fuel to the anode sides (100) of the fuel cells.

11. A method in accordance with claim 9, **characterized by**, that temperature values of the fuel cell stacks (103) are obtained and said predefined voltage values are defined as a function of said temperature values.

12. A method in accordance with claim 9, **characterized by**, that temperature values of the fuel cell stacks (103) are obtained on the basis of stack resistance information, which is accomplished by modulating the anode protection current.

13. A method in accordance with claim 9, **characterized by**, that temperature values are obtained separately of the fuel cell stacks (103) by injecting a high frequency alternating voltage signal along with and on top of a direct current signal to each group of stacks to measure stack specific resistance information, and by determining individual temperature information for each group of stacks on the basis of said stack-specific resistance information at least to limit current values used in a stack-specific electric anode protection.

14. A method in accordance with claim 10, **characterized by**, that reactants are displaced by purging in the emergency shutdown situation to minimize need for safety gases together with the method according to the claim 10.

15. A method in accordance with claim 9, **characterized by**, that a substantially powerful battery source is used as a source (120) of energy for providing electrical energy for the electric anode protection of the fuel cell stacks (103), and for operating as a transient energy buffer in island mode operation and/or for implementing Uninterruptible Power Supply, UPS, functionality by the fuel cell system.

16. A method in accordance with claim 9, **characterized by**, that a back-up generator is used as a source (120) of energy for providing electrical energy for the electric anode protection of the fuel cell stacks (103), and/or for implementing Uninterruptible Power Supply, UPS, functionality by the fuel cell system.

## Patentansprüche

1. Anordnung zum Minimieren eines Bedarfs an Sicherheitsgasen in einem Hochtemperatur-Brennstoffzellensystem, wobei jede Brennstoffzelle in dem Brennstoffzellensystem eine Anodenseite (100), eine Kathodenseite (102) und einen Elektrolyten (104) zwischen der Anodenseite und der Kathodenseite umfasst, wobei die Brennstoffzellen in Brennstoffzellenstapeln (103) angeordnet sind, und das Brennstoffzellensystem eine Brennstoffzellensystem-Rohrleitungsanordnung für Reaktanten und Mittel (108) zum Zuführen von Brennstoff zu den Anodenseiten (100) der Brennstoffzellen umfasst, **dadurch gekennzeichnet, dass** die Anordnung umfasst:
- Mittel (122) zum elektrischen Anodenschutz, die eine vorgegebene Spannung separat zu wenigstens zwei Gruppen von Brennstoffzellenstapeln (103) zuführen, um eine Oxidation von Anoden (100) zu unterbinden,
- eine Notenergiequelle (120), die zum Bereitstellen elektrischer Energie für wenigstens eine vorgegebene Mindestzeit für die Mittel (122) zum elektrischen Anodenschutz ausreicht,
- Mittel (124) zum separaten Reduzieren der vorgegebenen Spannung, um einen Anodenschutzstrom für einen elektrischen Anodenschutz eines Stapels (103) oder einer Gruppe von Stapeln im Fall fehlerhafter Stapel auf einen vorgegebenen maximalen Stromwert zu begrenzen und dadurch die anderen Stapel weiterhin mit Schutzstrom zu versorgen, um zu verhindern, dass sie Schaden nehmen,
- und die Anordnung Mittel (126) umfasst, um in einer Situation, wo eine Anodenoxidation durch die Mittel (108) zum Zuführen von Brennstoff zu den Anodenseiten (100) der Brennstoffzellen nicht unterbunden werden kann, die Mittel (122) zum elektrischen Anodenschutz zuverlässig auszulösen, und die Anordnung ferner Mittel zum Ermöglichen eines explosionssicheren Betriebs bei Vorhandensein einer explosiven Atmosphäre umfasst und die Anordnung ferner Mittel zum zuverlässigen Stromlosmachen aller nicht sicheren Einrichtungen umfasst.

2. Anordnung zum Minimieren eines Bedarfs an Sicherheitsgasen in einem Hochtemperatur-Brennstoffzellensystem nach Anspruch 1, **dadurch gekennzeichnet, dass** die Situation eine Notabschaltungssituation ist, wo eine Anodenoxidation durch die Mittel (108) zum Zuführen von Brennstoff zu den Anodenseiten (100) der Brennstoffzellen nicht unterbunden werden kann.

3. Anordnung zum Minimieren eines Bedarfs an Sicherheitsgasen in einem Hochtemperatur-Brennstoffzellensystem nach Anspruch 1, **dadurch gekennzeichnet, dass** die Anordnung Mittel (124) zum Erhalten von Temperaturwerten der Brennstoffzellenstapel (103) und zum Definieren der vorgegebenen Spannungswerte in Abhängigkeit von den Temperaturwerten umfasst.

4. Anordnung zum Minimieren eines Bedarfs an Sicherheitsgasen in einem Hochtemperatur-Brennstoffzellensystem nach Anspruch 3, **dadurch gekennzeichnet, dass** die Anordnung die Mittel (124) zum Erhalten von Temperaturwerten der Brennstoffzellenstapel (103) auf der Grundlage von Stapel-Widerstandsinformationen, was durch Modulieren des Anodenschutzstroms erreicht wird, umfasst.

5. Anordnung zum Minimieren eines Bedarfs an Sicherheitsgasen in einem Hochtemperatur-Brennstoffzellensystem nach Anspruch 4, **dadurch gekennzeichnet, dass** die Anordnung die Mittel (124) zum separaten Erhalten von Temperaturwerten der Brennstoffzellenstapel (103) durch Einspeisen eines Hochfrequenz-Wechselspannungssignals zusammen mit und auf einem Gleichstromsignal in jede Gruppe von Stapeln, um stapelspezifische Widerstandsinformationen zu messen, und durch Bestimmen individueller Temperaturinformationen für jede Gruppe von Stapeln auf der Grundlage der stapelspezifischen Widerstandsinformationen, wenigstens um Stromwerte zu begrenzen, die bei einem stapelspezifischen elektrischen Anodenschutz benutzt werden, umfasst.

6. Anordnung zum Minimieren eines Bedarfs an Sicherheitsgasen in einem Hochtemperatur-Brennstoffzellensystem nach Anspruch 2, **dadurch gekennzeichnet, dass** die Anordnung Mittel (130) zur Verlagerung von Reaktanten durch Spülen in der Notabschaltungssituation, um zusammen mit der Anordnung nach Anspruch 1 einen Bedarf an Sicherheitsgasen zu minimieren, umfasst.

7. Anordnung zum Minimieren eines Bedarfs an Sicherheitsgasen in einem Hochtemperatur-Brennstoffzellensystem nach Anspruch 1, **dadurch gekennzeichnet, dass** die Anordnung eine im Wesentlichen leistungsfähige Batteriequelle als die Quelle (120) von Energie zum Bereitstellen elektrischer Energie für den elektrischen Anodenschutz der Brennstoffzellenstapel (103) und zum Betreiben als zeitweiliger Energiepuffer im Inselmodusbetrieb und/oder zum Realisieren einer Funktionalität als unterbrechungsfreie Stromversorgung, *Uninterruptible Power Supply* - UPS, durch das Brennstoffzellensystem umfasst.

8. Anordnung zum Minimieren eines Bedarfs an Sicherheitsgasen in einem Hochtemperatur-Brennstoffzellensystem nach Anspruch 1, **dadurch gekennzeichnet, dass** die Anordnung ein Notstromaggregat als die Quelle (120) von Energie zum Bereitstellen elektrischer Energie für den elektrischen Anodenschutz der Brennstoffzellenstapel (103) und/oder zum Realisieren einer Funktionalität als unterbrechungsfreie Stromversorgung, *Uninterruptible Power Supply* - UPS, durch das Brennstoffzellensystem umfasst.

9. Verfahren zum Minimieren eines Bedarfs an Sicherheitsgasen in einem Hochtemperatur-Brennstoffzellensystem, wobei in dem Verfahren Brennstoff zu Anodenseiten (100) der Brennstoffzellen zugeführt wird und vorgegebene Spannungs- und Stromwerte erhalten werden, **dadurch gekennzeichnet, dass** in dem Verfahren:
- ein elektrischer Anodenschutz durchgeführt wird, indem eine vorgegebene Spannung separat zu wenigstens zwei Gruppen von Brennstoffzellenstapeln (103) zugeführt wird, um eine Oxidation von Anoden (100) zu unterbinden,
- elektrische Energie aus einer Notenergiequelle (120) für wenigstens eine vorgegebene Mindestzeit für das Durchführen des elektrischen Anodenschutzes bereitgestellt wird,
- die vorgegebene Spannung separat reduziert wird, um einen Anodenschutzstrom auf einen vorgegebenen maximalen Stromwert zum elektrischen Anodenschutz eines Stapels (103) oder einer Gruppe von Stapeln im Fall fehlerhafter Stapel zu begrenzen und dadurch die anderen Stapel weiterhin mit Schutzstrom zu versorgen, um zu verhindern, dass sie Schaden nehmen,
- und in einer Situation, wo eine Anodenoxidation durch Zuführen von Brennstoff zu den Anodenseiten (100) der Brennstoffzellen nicht unterbunden werden kann, das Durchführen eines elektrischen Anodenschutzes zuverlässig ausgelöst wird und in dem Verfahren ein explosionssicherer Betrieb bei Vorhandensein einer explosiven Atmosphäre gestattet wird und alle nicht sicheren Einrichtungen zuverlässig stromlos gemacht werden.

10. Verfahren nach Anspruch 9, **dadurch gekennzeichnet, dass** die Situation eine Notabschaltungssituation ist, wo eine Anodenoxidation durch Zuführen von Brennstoff zu den Anodenseiten (100) der Brennstoffzellen nicht unterbunden werden kann.

11. Verfahren nach Anspruch 9, **dadurch gekennzeichnet, dass** Temperaturwerte der Brennstoffzellenstapel (103) erhalten werden und die vorgegebenen Spannungswerte in Abhängigkeit von den Temperaturwerten definiert werden.

12. Verfahren nach Anspruch 9, **dadurch gekennzeichnet, dass** Temperaturwerte der Brennstoffzellenstapel (103) auf der Grundlage von Stapel-Widerstandsinformationen erhalten werden, was durch Modulieren des Anodenschutzstroms erreicht wird.

13. Verfahren nach Anspruch 9, **dadurch gekennzeichnet, dass** Temperaturwerte der Brennstoffzellenstapel (103) separat erhalten werden, indem ein Hochfrequenz-Wechselspannungssignal zusammen mit und auf einem Gleichstromsignal in jede Gruppe von Stapeln eingespeist wird, um stapelspezifische Widerstandsinformationen zu messen, und individuelle Temperaturinformationen für jede Gruppe von Stapeln auf der Grundlage der stapelspezifischen Widerstandsinformationen bestimmt werden, wenigstens um Stromwerte zu begrenzen, die bei einem stapelspezifischen elektrischen Anodenschutz benutzt werden.

14. Verfahren nach Anspruch 10, **dadurch gekennzeichnet, dass** in der Notabschaltungssituation Reaktanten durch Spülen verlagert werden, um zusammen mit dem Verfahren nach Anspruch 10 einen Bedarf an Sicherheitsgasen zu minimieren.

15. Verfahren nach Anspruch 9, **dadurch gekennzeichnet, dass** eine im Wesentlichen leistungsfähige Batteriequelle als Quelle (120) von Energie zum Bereitstellen elektrischer Energie für den elektrischen Anodenschutz der Brennstoffzellenstapel (103) und zum Betreiben als zeitweiliger Energiepuffer im Inselmodusbetrieb und/oder zum Realisieren einer Funktionalität als unterbrechungsfreie Stromversorgung, *Uninterruptible Power Supply* - UPS, durch das Brennstoffzellensystem benutzt wird.

16. Verfahren nach Anspruch 9, **dadurch gekennzeichnet, dass** ein Ersatzgenerator als Quelle (120) von Energie zum Bereitstellen elektrischer Energie für den elektrischen Anodenschutz der Brennstoffzellenstapel (103) und/oder zum Realisieren einer Funktionalität als unterbrechungsfreie Stromversorgung, *Uninterruptible Power Supply* - UPS, durch das Brennstoffzellensystem benutzt wird.

## Revendications

1. Dispositif destiné à réduire les besoins en gaz de sécurité dans un système de piles à combustible à haute température, chaque pile à combustible dans le système de piles à combustible comprenant un côté anode (100), un côté cathode (102) et un électrolyte (104) entre le côté anode et le côté cathode, les piles à combustible étant disposées dans des empilements de piles à combustible (103), et le système de piles à combustible comprenant une tuyauterie de système de piles à combustible pour des réactifs, et un moyen (108) destiné à alimenter du combustible vers les côtés anode (100) des piles à combustible, **caractérisé en ce que** le dispositif comprend :
- un moyen (122) pour la protection électrique des anodes, fournissant une tension prédéfinie séparément à au moins deux groupes d'empilements de piles à combustible (103) pour empêcher l'oxydation des anodes (100),
- une source de secours (120) d'énergie suffisante pour fournir de l'énergie électrique au moins pour une durée minimum prédéterminée pour ledit moyen (122) pour la protection électrique des anodes,
- un moyen (124) destiné à réduire séparément la tension prédéfinie pour limiter le courant de protection des anodes à une valeur de courant maximum prédéfinie pour la protection électrique des anodes d'un empilement (103) ou un groupe d'empilements en cas d'empilements défectueux, ce qui permet de maintenir l'alimentation des autres empilements en courant de protection pour empêcher tout endommagement de ceux-ci,
- et le dispositif comprenant un moyen (126) permettant de déclencher de manière fiable ledit moyen (122) pour la protection électrique des anodes dans une situation où une oxydation des anodes ne peut pas être empêchée par le moyen (108) destiné à alimenter du combustible vers les côtés anode (100) des piles à combustible, et le dispositif comprenant en outre un moyen assurant le fonctionnement sans risque d'explosion en présence d'une atmosphère explosive, et le dispositif comprenant en outre un moyen permettant de désactiver de manière fiable tous les équipement non sécurisés.

2. Dispositif destiné à réduire les besoins en gaz de sécurité dans un système de piles à combustible à haute température selon la revendication 1, **caractérisé en ce que** la situation est une situation d'arrêt d'urgence, où une oxydation des anodes ne peut pas être empêchée par le moyen (108) destiné à alimenter du combustible vers les côtés anode (100) des piles à combustible.

3. Dispositif destiné à réduire les besoins en gaz de sécurité dans un système de piles à combustible à haute température selon la revendication 1, **caractérisé en ce que** le dispositif comprend un moyen (124) permettant d'obtenir des valeurs de température des empilements de piles à combustible (103) et de définir lesdites valeurs de tension prédéfinies en fonction desdites valeurs de température.

4. Dispositif destiné à réduire les besoins en gaz de sécurité dans un système de piles à combustible à haute température selon la revendication 3, **caractérisé en ce que** le dispositif comprend ledit moyen (124) permettant d'obtenir des valeurs de température des empilements de piles à combustible (103) sur la base d'informations de résistance des empilements, ce qui est réalisé en modulant le courant de protection des anodes.

5. Dispositif destiné à réduire les besoins en gaz de sécurité dans un système de piles à combustible à haute température selon la revendication 4, **caractérisé en ce que** le dispositif comprend le moyen (124) permettant d'obtenir des valeurs de température des empilements de piles à combustible (103) en délivrant un signal de tension alternative à haute fréquence ensemble avec et en plus d'un signal de courant direct à chaque groupe d'empilements pour mesurer l'information de résistance spécifique à l'empilement, et en déterminant une information de température individuelle pour chaque groupe d'empilements sur la base de ladite information de résistance spécifique à l'empilement, au moins pour limiter des valeurs de courant utilisées dans une protection électrique d'anodes spécifique à l'empilement.

6. Dispositif destiné à réduire les besoins en gaz de sécurité dans un système de piles à combustible à haute température selon la revendication 2, **caractérisé en ce que** le dispositif comprend un moyen (130) destiné à déplacer des réactifs par évacuation dans la situation d'arrêt d'urgence pour réduire les besoins en gaz de sécurité ensemble avec le dispositif selon la revendication 1.

7. Dispositif destiné à réduire les besoins en gaz de sécurité dans un système de piles à combustible à haute température selon la revendication 1, **caractérisé en ce que** le dispositif comprend une source de piles substantiellement puissante en tant que source (120) d'énergie pour fournir de l'énergie électrique pour la protection électrique des anodes des empilements de piles à combustible (103), et pour fonctionner en tant que tampon d'énergie transitoire dans un fonctionnement en mode insulaire et/ou pour la mise en oeuvre d'une fonctionnalité d'alimentation sans coupure, UPS, par le système de piles à combustible.

8. Dispositif destiné à réduire les besoins en gaz de sécurité dans un système de piles à combustible à haute température selon la revendication 1, **caractérisé en ce que** le dispositif comprend un générateur de secours en tant que source (120) d'énergie pour l'alimentation en énergie électrique pour la protection électrique des anodes des empilements de piles à combustible (103), et/ou pour la mise en oeuvre d'une fonctionnalité d'alimentation sans coupure, UPS, par le système de piles à combustible.

9. Procédé destiné à réduire les besoins en gaz de sécurité dans un système de piles à combustible à haute température, ledit procédé comprenant l'alimentation de combustible vers les côtés anode (100) des piles à combustible, et l'obtention de valeurs de tension et de courant prédéfinies, **caractérisé en ce que** le procédé comprend :
- la mise en place d'une protection électrique des anodes par l'alimentation d'une tension prédéfinie séparément vers au moins deux groupes d'empilements de piles à combustible (103) pour empêcher l'oxydation des anodes (100),
- l'alimentation d'énergie électrique à partir d'une source d'énergie de secours (120) au moins pour une durée minimum prédéterminée pour la mise en place de ladite protection électrique des anodes,
- la réduction séparée de la tension prédéfinie pour limiter le courant de protection des anodes à une valeur de courant maximum prédéfinie pour la protection électrique des anodes d'un empilement (103) ou d'un groupe d'empilements alimenté en courant de protection afin d'empêcher l'endommagement de celui-ci,
- et le déclenchement fiable de la protection électrique des anodes dans une situation où l'oxydation des anodes ne peut pas être empêchée par l'alimentation de combustible vers les côtés anode (100) des piles à combustible, et le procédé comprenant la garantie d'un fonctionnement sans risque d'explosion en présence d'une atmosphère explosive, ainsi que la désactivation fiable de tous les équipements non sécurisés.

10. Procédé selon la revendication 9, **caractérisé en ce que** la situation est une situation d'arrêt d'urgence, où l'oxydation des anodes ne peut pas être empêchée par l'alimentation de combustible vers les côtés anode (100) des piles à combustible.

11. Procédé selon la revendication 9, **caractérisé en ce que** des valeurs de température des empilements de piles à combustible (103) sont obtenues et lesdites valeurs de tension prédéfinies sont définies en fonction desdites valeurs de température.

12. Procédé selon la revendication 9, **caractérisé en ce que** des valeurs de température des empilements de piles à combustible (103) sont obtenues sur la base d'informations de résistance des empilements, ce qui est réalisé en modulant le courant de protection des anodes.

13. Procédé selon la revendication 9, **caractérisé en ce que** des valeurs de température sont obtenues séparément pour les empilements de piles à combustible (103), en délivrant un signal de tension alternative à haute fréquence ensemble avec et en plus d'un signal de courant direct à chaque groupe d'empilements pour mesurer l'information de résistance spécifique à l'empilement, et en déterminant une information de température individuelle pour chaque groupe d'empilements sur la base de ladite information de résistance spécifique à l'empilement, au moins pour limiter des valeurs de courant utilisées dans une protection électrique d'anodes spécifique à l'empilement.

14. Procédé selon la revendication 10, **caractérisé en ce que** des réactifs sont déplacés par évacuation dans la situation d'arrêt d'urgence pour réduire les besoins en gaz de sécurité ensemble avec le procédé selon la revendication 10.

15. Procédé selon la revendication 9, **caractérisé en ce qu'**une source de piles substantiellement puissante est utilisée en tant que source (120) d'énergie pour fournir de l'énergie électrique pour la protection électrique des anodes des empilements de piles à combustible (103), et pour fonctionner en tant que tampon d'énergie transitoire dans un fonctionnement en mode insulaire et/ou pour la mise en oeuvre d'une fonctionnalité d'alimentation sans coupure, UPS, par le système de piles à combustible.

16. Procédé selon la revendication 9, **caractérisé en ce qu'**un générateur de secours est utilisé en tant que source (120) d'énergie pour l'alimentation en énergie électrique pour la protection électrique des anodes des empilements de piles à combustible (103), et/ou pour la mise en oeuvre d'une fonctionnalité d'alimentation sans coupure, UPS, par le système de piles à combustible.
